Europäisches Patentamt

European Patent Office

Office européen des brevets

(11)  EP 1 132 341 A1

## (12)  DEMANDE DE BREVET EUROPEEN

(43) Date de publication:
**12.09.2001  Bulletin 2001/37**

(51) Int Cl.7: **C01B 31/12**

(21) Numéro de dépôt: **01400517.7**

(22) Date de dépôt: **28.02.2001**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **07.03.2000  FR 0002925**

(71) Demandeur: **L'AIR LIQUIDE, SOCIETE ANONYME
POUR
L'ETUDE ET L'EXPLOITATION DES PROCEDES
GEORGES CLAUDE
75321 Paris Cédex 07 (FR)**

(72) Inventeurs:
• **Monereau, Christian
  75011 Paris (FR)**
• **Moreau, Serge
  78140 Velizy Villacoublay (FR)**

(74) Mandataire: **Pittis, Olivier et al
L'Air Liquide, S.A.,
Service Brevets & Marques,
75, Quai d'Orsay
75321 Paris Cedex 07 (FR)**

### (54)  Charbon actif amélioré par traitement à l'acide et son utilisation pour séparer des gaz

(57)    L'invention concerne un procédé de fabrication de charbon actif amélioré présentant une résistance élevée aux produits soufrés, tel le H$_2$S, le COS et les mercaptans ; le charbon actif amélioré ainsi obtenu ; ainsi qu'un procédé de purification d'un flux gazeux contenant des composés soufrés. Le gaz à traiter est de l'air, de l'azote, de l'hydrogène produit par reformage ou craquage d'alcools d'ammoniac ou d'hydrocarbures, du gaz naturel, du gaz de combustion ou de fermentation.

EP 1 132 341 A1

## Description

La présente invention concerne le domaine de la purification de gaz ou de mélanges gazeux par adsorption des impuretés soufrées qui s'y trouvent sur un adsorbant carboné de type charbon actif, en particulier un procédé PSA pour purifier un gaz, tel de l'hydrogène contenant des impuretés soufrées, tels que les composés $H_2S$, COS et les mercaptans; un charbon actif amélioré particulièrement bien adapté de purification ou de séparation de gaz, ainsi qu'un procédé de traitement chimique permettant de fabriquer un tel charbon actif amélioré.

Une unité PSA (Pressure Swing Adsorption = Adsorption avec variations de pression) de purification de gaz contient habituellement un adsorbant ou une combinaison d'adsorbants qui doit être capable de retenir sélectivement les impuretés contenues dans le gaz à traiter.

Les procédés et unités PSA se sont révélés très efficaces pour la séparation de mélanges gazeux variés, notamment pour l'obtention d'oxygène ou d'azote à partir d'air et pour la production d'hydrogène pur à partir de mélanges gazeux contaminés par diverses impuretés.

En effet, la production d'hydrogène de pureté élevée est d'un grand intérêt sur le plan industriel, celui-ci étant largement utilisé dans de nombreux procédés de synthèse tels que l'hydrocraquage, la production de méthanol, la production d'oxoalcools et les procédés d'isomérisation.

De façon générale, les procédés PSA mettent à profit la sélectivité d'adsorption d'un adsorbant donné pour une ou plusieurs des substances contaminantes du mélange gazeux à purifier.

Ainsi, dans le cas de la purification d'hydrogène, les impuretés devant être habituellement éliminées sont : la vapeur d'eau, le $CO_2$, le CO, l'azote, les hydrocarbures linéaires, ramifiés ou cycliques, saturés ou insaturés comportant un ou plusieurs atomes de carbone dans leur structure hydrocarbonée ainsi que leurs dérivés, par exemple les composés en $C_1$-$C_8$, tels que $CH_4$, $C_2H_4$, $C_2H_6$, $C_3H_8$, les composés BTX (benzène-toluène-xylène) ; les mercaptans ; le chlore ou l'ammoniac, le COS ; le $H_2S$ ; le $SO_2$ ; les alcools, par exemple les alcools légers en $C_1$-$C_3$ ; d'autres composés organiques volatils, tels les esters, les éthers, les acides et les composés halogénés.

Ces composés sont généralement éliminés par un ensemble d'adsorbants, c'est-à-dire de couches d'adsorbants placées en série. Ainsi, on utilise classiquement de l'alumine ou du gel de silice pour retenir en particulier la vapeur d'eau ; du charbon activé pour retenir en particulier les hydrocarbures, le $CO_2$ et la vapeur d'eau ; et de la zéolite pour éliminer les impuretés peu adsorbables, tels le CO et l'azote.

Habituellement, les adsorbants sont placés dans un mais plus habituellement plusieurs adsorbeurs fonctionnant en alternance.

La proportion des différents adsorbants au sein du lit d'adsorbant dépend de la composition du gaz à traiter et de la pression, et il existe donc un grand nombre de combinaisons possibles d'adsorbants.

Les impuretés sont éliminées par un ou plusieurs adsorbants placés en série depuis l'amont de l'adsorbeur, c'est-à-dire le côté où se fait l'entrée des gaz à traiter dans ledit adsorbeur.

Ainsi, on peut citer le document WO-A-97/45363 qui porte sur un procédé pour la purification de mélanges gazeux à base d'hydrogène, pollués par diverses impuretés, dont du monoxyde de carbone et au moins une autre impureté choisie parmi le dioxyde de carbone et les hydrocarbures linéaires, ramifiés ou cycliques, saturés ou insaturés en $C_1$-$C_8$. Le flux de gaz à purifier est mis en contact, dans une zone d'adsorption, avec un premier adsorbant sélectif du dioxyde de carbone et des hydrocarbures en $C_1$-$C_8$, et un second adsorbant qui est une zéolite du type faujasite échangée à au moins 80% au lithium et dont le rapport Si/Al est inférieur à 1,5, pour éliminer au moins le monoxyde de carbone (CO). Selon ce document, l'amélioration apportée par le procédé est due à l'utilisation d'une zéolite particulièrement efficace, à savoir une zéolite X échangée au lithium.

Le document US-A-3,150,942 enseigne, quant à lui, l'utilisation d'une zéolite contenant des cations sodium ou des cations sodium et calcium pour purifier un flux d'hydrogène.

De manière analogue, le document US-A-4,477,267 décrit un procédé de purification d'hydrogène mettant en oeuvre une zéolite X échangée de 70 à 90% avec des cations calcium et contenant, en outre, un liant inerte.

Le document US-A-4,957,514 divulgue un procédé de purification d'hydrogène mettant en oeuvre une zéolite X échangée de 60 à 80% avec des cations baryum.

En outre, le document US-A-5,489,327 concerne la purification d'hydrogène gazeux par mise en contact avec un hydrure d'alliage de zirconium.

Enfin, le document JP-A-860146024 décrit un procédé PSA pour purifier des gaz impurs utilisant une zéolite de type mordénite échangée au lithium, côté production et une autre zéolite, côté alimentation.

A l'inverse, certains documents soulignent que l'adsorbant ou les adsorbants mis en oeuvre dans un procédé PSA pour purifier de l'hydrogène n'ont que peu, voire même aucune importance.

Ainsi, le document Pressure Swing Adsorption, 1994, VCH publishers, D.M. Ruthvens, S. Farooq, K.S. Knaebel, page 238, enseigne que "puisque la sélectivité pour la plupart des impuretés est élevée en comparaison de celle pour l'hydrogène, n'importe quel adsorbant peut être utilisé" pour purifier de l'hydrogène.

De manière analogue, d'après le document US-A-4,299,596, tous les adsorbants conventionnels peuvent être utilisés pour produire de l'hydrogène, par exemples, les charbons actifs, les gels de silice, les tamis moléculaires, tels que les zéolites, les tamis carbonés...

Par ailleurs, le document US-A-4,482,361 cite la possibilité d'utiliser indifféremment des adsorbants adéquats, tels que les tamis moléculaires zéolitiques, les charbons actifs, les gels de silice, les alumines activées ou similaires.

De façon analogue, le document US-A-4,834,780 enseigne que l'adsorption peut être effectuée dans tous les cas où l'on a sélectionné un adsorbant adapté pour le procédé de séparation considéré, par exemple, les charbons actifs, les gels de silice, les alumines ou les tamis moléculaires.

De manière plus générale, les sources de gaz que l'on traite par adsorption à l'échelle industrielle sont variées.

On peut citer à titre d'exemple le gaz naturel, les gaz de synthèse, des résiduaires divers de la chimie, pétrochimie ou de l'industrie du pétrole, les gaz de combustion ou issus du traitement des déchets...

Un nombre important de ces mélanges gazeux contient des produits soufrés très souvent présents à l'origine de la matière première, tels les charbons, les gisements d'hydrocarbures ou les sources naturelles de $CO_2$, voire rajoutés au cours des traitements amont, par exemple pour rendre odorant le gaz par ajout de mercaptans, ou comme réactif ou intermédiaire réactionnel, dès lors, les procédés d'adsorption utilisés sur de tels gaz sont variés.

Au niveau du procédé, l'adsorbant peut être utilisé de différentes manières. Ainsi, il peut s'agir d'épuration à charge et adsorbant perdus, c'est-à-dire qu'une fois que l'adsorbant est saturé en le composé que l'on veut retenir, on remplace ladite charge d'adsorbant par une charge nouvelle.

A l'inverse, il peut s'agir d'épurations cycliques alternant phases d'adsorption et de régénération, tels les procédés TSA qui utilisent essentiellement une élévation de température pour régénérer l'adsorbant saturé, ou les procédés PSA qui utilisent à la même fin essentiellement l'effet d'un abaissement de la pression allant éventuellement jusqu'à une mise sous vide, comme expliqué ci-avant.

Il existe également des procédés mixtes qui mettent en oeuvre simultanément plusieurs types de fonctionnement.

Les adsorbants utilisés sont variés et on peut citer classiquement les gels de silice, les alumines activées, les zéolites, les charbons actifs.

Dans le cas d'épuration de fluides pollués par des produits soufrés, les charbons actifs sont très largement utilisés en particulier à cause de l'accessibilité de leur large volume poreux.

Concernant par exemple l'arrêt de l'hydrogène sulfuré ($H_2S$), on peut noter que le charbon actif commercialisé par la société NORIT sous la référence RB 3 est recommandé pour l'épuration de l'air d'égout, alors que celui référencé R 1 Extra est conseillé pour les masques à gaz.

Pour la production d'hydrogène, les inventeurs ont été amenés à étudier le traitement de divers gaz résiduaires contenant des produits soufrés, en vue de la réalisation de plusieurs unités PSA de traitement de gaz de fours à coke.

Habituellement, une unité PSA $H_2$ met en oeuvre, au sein de chaque adsorbeur, un cycle de pression comportant de façon schématique :

.  une phase de production sensiblement isobare à la pression haute du cycle d'adsorption,

.  une phase de régénération de l'adsorbant comprenant au moins une étape de décompression à co-courant par équilibrage de pression avec un autre adsorbeur ; une étape de dépressurisation finale à contre-courant avec évacuation de gaz résiduaire ; et généralement une étape d'élution à la pression basse du cycle , le gaz d'élution provenant d'au moins une deuxième étape de décompression à co-courant d'un adsorbeur ; et

.  une phase de repressurisation comprenant au moins une étape d'équilibrage de pression avec un autre adsorbeur et une étape de recompression finale au moyen de gaz de production.

De façon générale , les cycles peuvent comprendre plusieurs étapes d'équilibrage, total ou partiel, préférentiellement de 1 à 4 étapes d'équilibrage.

Les transferts gazeux peuvent s'effectuer directement d'adsorbeur à adsorbeur ou par l'intermédiaire d'une ou plusieurs capacités de stockage de gaz.

Les étapes de recompression par équilibrage et de recompression par le gaz de production peuvent être ou non au moins partiellement simultanées et comporter éventuellement une repressurisation partielle par de l'alimentation en gaz.

Des étapes complémentaires de balayage peuvent être introduites, en particulier si on veut récupérer pour la valoriser une autre fraction du gaz à traiter différente de l'hydrogène.

De plus, le cycle peut également comporter des temps d'attente durant lesquels les adsorbeurs sont isolés.

Classiquement, la pression d'adsorption est comprise entre 5 bars et 70 bars, de préférence entre 15 bars et 40 bars ; la pression de désorption est comprise entre 0.1 bar et 10 bars, de préférence entre 1 et 5 bars ; et la température du flux d'hydrogène à purifier est comprise entre -25°C et + 60°C, de préférence entre + 5°C et + 35°C.

Ceci est d'ailleurs illustré, par exemple, par les documents  US-A-3,702,525,  US-A-3,986,849,  US-A-4,077,779,  US-A-4,153,428,  US-A-4,696,680,  US-A-4,813,980,  US-A-4,963,339,  US-A-3,430,418,  US-A-5,096,470,  US-A-5,133,785,  US-A-5,234,472,  US-A-5,354,346, US-A-5,294,247 et US-A-5,505,764, qui décrivent des cycles de fonctionnement de procédés PSA pour produire de l'hydrogène.

De telles unités PSA sont mises en oeuvre sur des gaz issus de fours à coke, après que ces gaz aient subi divers traitements, tels que des lavages à l'eau et/ou à l'huile destinés à retenir une partie des hydrocarbures les plus lourds, une désulfuration partielle...

Dans ces gaz de fours à coke, à côté des principaux constituants qui sont l'hydrogène, le méthane, le monoxyde de carbone, les hydrocarbures, le dioxyde de carbone et l'azote, on trouve un grand nombre d'impuretés telles que l'oxygène, des produits soufrés, des hydrocarbures très lourds ($\geq C_7$), des goudrons...

De par la présence de ces goudrons qui peuvent venir partiellement colmater les pores des adsorbants, les adsorbeurs utilisés sur ce type de gaz présentent souvent deux particularités, à savoir :

-   chaque adsorbeur comporte un système de grilles internes inclinées permettant de vidanger l'adsorbant compris entre ces grilles et de le remplacer par un adsorbant neuf sans avoir à vider la totalité de l'adsorbeur. Le volume qu'il est ainsi possible de changer périodiquement peut représenter de 5 à 40 % du volume total de l'adsorbeur, généralement entre 10 et 15 %. Le but de ce système est de remplacer l'adsorbant qui a perdu une part de sa capacité d'adsorption à cause des impuretés les plus difficilement régénérables et ce faisant de retrouver les pleines capacités d'adsorption et d'éviter que ces impuretés n'atteignent les couches supérieures du lit d'adsorbant.
-   chaque adsorbeur comporte en particulier en partie inférieure des systèmes de prélèvement d'adsorbants. Ainsi, en procédant régulièrement à l'analyse desdits prélèvements, il est possible de suivre l'évolution des impuretés très difficilement régénérables et de mesurer la capacité d'adsorption résiduelle de l'adsorbant. Ce suivi permet d'effectuer le changement d'adsorbant au moment adéquat.

L'adsorbant utilisé dans la zone périodiquement renouvelable est habituellement du charbon actif disponible dans le commerce auprès de sociétés spécialisées telles que NORIT, CECA, CARBOTECH, PICA...

Les premiers prélèvements effectués sur des unités PSA industrielles de traitement de gaz de coke ont fait apparaître deux phénomènes.

D'une part, la présence dans le charbon actif de goudrons mais en quantité relativement faible. La progression de ces dépôts au cours du temps était très lente et seule les toutes premières couches d'adsorbant étaient atteintes.

De façon plus importante, on a constaté des dépôts de soufre progressant plus rapidement vers les couches supérieures d'adsorbant.

Lorsque ces dépôts de soufre devenaient importants, la capacité d'adsorption du charbon actif diminuait très nettement pour atteindre par exemple sur le $CO_2$ seulement 50 % de la capacité d'origine.

De là, on comprend immédiatement que, si le chargement progressif de charbon actif par les goudrons n'est pas préoccupant car étant très lent et très localisé, à l'inverse, le chargement du charbon par les dépôts soufrés est beaucoup plus problématique car il se propage plus rapidement à travers l'adsorbant et conduit, en outre, à une dégradation notable des propriétés d'adsorption de l'adsorbant, d'où il résulte une baisse de l'efficacité du procédé de séparation de gaz si l'on opère sans zone renouvelable, ou une période de chargement plus courte si l'on opère avec une zone renouvelable.

Il est connu que la présence de produits soufrés dans les gaz à purifier peut poser des problèmes en adsorption. En particulier, lors de la déshydratation de gaz tel que le gaz naturel, contenant H2S et $CO_2$, il peut apparaître un problème de formation de COS selon la réaction :

$$H_2S + CO_2 \leftrightarrows COS + H_2O$$

Cette réaction peut être catalysée par les zéolites, voire par les liants minéraux intervenant dans la mise en forme desdites zéolites. Le COS étant faiblement adsorbé, il s'ensuit une percée prématurée de ce produit dans le gaz purifié.

Dans ce cas, la zéolite 5A est réputé avoir une activité catalytique plus faible que la zéolite 4A ou les zéolites du type X.

Pour remédier à la formation de COS, le document US-A-4,329,160 préconise d'utiliser certains tamis moléculaires particuliers.

Un autre problème est la réduction importante de la durée de vie des tamis moléculaires, engendrée par des dépôts de soufre en présence simultanée d'un composé oxydant, comme des traces d'oxygène ou par des dépôts de coke, en particulier dans le cas des mercaptans, comme le souligne le document US-A-3,849,299 qui traite de la suppression des dépôts de coke dans un adsorbant de type 5A après un traitement par de l'hydrogène.

L'élimination de $H_2S$ (et de $SO_2$) dans un flux gazeux par adjonction d'oxygène et passage du mélange sur charbon actif avec dépôt de soufre est également décrit par le document US-A-4,263,271. Toutefois, la question de l'impact des impuretés de type oxydes métalliques dans le charbon actif n'y est pas abordée. Le document US-A-5,256,384 est analogue à US-A-4,263,271.

Par ailleurs, le document US-A-5,976,373 concerne l'épuration en $H_2S$ de bio-gaz issu des digesteurs anaérobiques. L'arrêt de $H_2S$ s'effectue également par dépôt du soufre en présence d'une adjonction d'oxygène, à savoir de l'air.

On constate que, dans l'art antérieur, la tendance est plutôt de favoriser les dépôts de soufre sur le charbon, ce qui va à l'encontre du but recherché dans le cadre de la présente invention.

Par ailleurs, le document US-A-5,695,483 propose un procédé d'activation chimique d'un charbon actif dans lequel le charbon est mis en contact avec une solution basique d'hydroxyde de potassium. Le charbon ainsi activé est utilisable pour fractionner des hydrocarbures, pour purifier des gaz industriels, dans des appareils de lutte contre la pollution, dans le traitement d'eau, en tant que catalyseur...

Le document US-A-4,157,314 enseigne un procédé pour fabriquer des particules de charbon actif résistantes à l'abrasion par mise en contact du charbon avec une solution acide diluée, à une concentration de 1 à 25 % en poids, de façon à réduire le contenu volatile et augmenter le contenu fixe du charbon.

En outre, le document US-A-5,013,698 décrit un procédé de régénération de charbon actif usagé ayant été utilisé pour la purification d'eau, dans lequel le calcium sous forme de carbonate de calcium ($CaCO_3$) piégé par le charbon est éliminé par traitement avec un acide inorganique, puis rincé à l'eau, séché et activé à une température de 500°C à 1000°C par contact avec de la vapeur d'eau pour stimuler la réaction de conversion de carbone, en présence de vapeur d'eau, en monoxyde de carbone et hydrogène.

Le document US-A-5,064,805 enseigne un procédé de production de charbon activé pauvre en soufre par mise en contact d'un charbon d'écorce de noix de coco avec un hydrate d'oxyde de potassium.

Par ailleurs, le document US-A-4,014,817 enseigne un procédé de fabrication de charbon actif dans lequel on met en forme et on oxyde simultanément le charbon, puis on active le charbon actif à une température de 540°C à 1100°C. Selon ce procédé, préalablement à la mise en forme du charbon, celui-ci est lavé à l'acide pour éliminer les oxydes de calcium et de magnésium.

Aucun des documents cités ci-dessus n'enseigne un moyen d'améliorer les procédés PSA de purification de gaz, en particulier de purification d'hydrogène, c'est-à-dire pouvoir éviter, minimiser ou ralentir la pollution de l'adsorbant carboné par les impuretés soufrées, tels les mercaptans, le $H_2S$ ou le COS, contenues dans le flux gazeux, tel l'hydrogène, à purifier.

Le but de la présente invention est alors de résoudre ce problème de manière à obtenir un procédé de purification efficace de gaz contenant au moins une impureté gazeuse, soufrée notamment, choisie dans le groupe formé par les mercaptans, le $H_2S$, le COS... dans lequel le flux gazeux à purifier est mis en contact avec des particules d'un adsorbant carboné poreux.

La solution apportée par la présente invention repose sur une amélioration du charbon actif utilisé dans le procédé de séparation de gaz permettant de rendre ce charbon actif moins sensible aux espèces et composés soufrés se trouvant dans le flux de gaz à séparer ou à purifier.

De là, l'invention concerne en premier lieu un procédé de traitement chimique d'un charbon actif destiné à éliminer au moins une partie des oxydes minéraux susceptibles d'être associés audit charbon, lesdits oxydes métalliques étant choisis dans le groupe formé par $SiO_2$, $Fe_2O_3$, $Al_2O_3$, $Na_2O$, CuO et $K_2O$ dans lequel on procède selon les étapes de :

(a) amener un charbon actif auquel sont associés des oxydes minéraux devant être éliminés ;
(b) laver ledit charbon actif avec au moins une solution contenant au moins un acide minéral fort pour éliminer au moins une partie desdits oxydes ;
(c) rincer ledit charbon actif lavé à l'étape (b) avec au moins une solution aqueuse pour éliminer les oxydes résiduels et/ou des résidus d'acide ;
(d) sécher le charbon actif obtenu à l'étape (c) ;
(e) récupérer un charbon actif ayant un taux de cendre résiduelle accessible inférieur à 2 % en poids, préférentiellement inférieur à 1,5 % en poids.

Selon le cas, le procédé de traitement de l'invention peut comprendre l'une ou plusieurs des caractéristiques suivantes :

- le charbon actif est un charbon de terre, végétal ou synthétique, de préférence un charbon végétal ;
- on élimine, en outre, au moins une partie des oxydes de calcium et/ou de magnésium par lavage du charbon à l'étape (b) ;
- à l'étape (b), l'acide est choisi dans le groupe formé par HCl, HF, $HNO_3$ et $H_2SO_4$ ;
- il comporte une étape supplémentaire, entre les étapes (b) et (c), de neutralisation de l'acidité résiduelle par lavage avec une solution d'hydroxyde alcalin ou alcalino-terreux ou un sel d'acide faible d'un métal alcalin ou alcalino-terreux ;
- à l'étape (c), le rinçage est réalisé avec de l'eau, de préférence de l'eau distillée ou déminéralisée ;
- à l'étape (d), le séchage est réalisé à une température comprise entre 40°C et 120°C, de préférence 80°C et 100°C ;

De plus, l'invention concerne aussi un charbon actif amélioré obtenu par un tel procédé de traitement dont le taux de cendre résiduelle accessible est inférieur à 2 % en poids, de préférence inférieur à 1,5 % en poids, ainsi que son utilisation dans un procédé de purification de gaz.

Le charbon actif selon l'invention se caractérise par un taux de cendre de moins de 2 % en poids, de préférence de moins de 1,5 % en poids, et/ou par une teneur de moins de 0,1 % en poids en chacun des oxydes métalliques choisis parmi les oxydes de Fe, Al, Si, Mg, Cu, Na, K et Ca, de préférence inférieure à 0,05 % en poids en oxyde de fer, préférentiellement inférieure à 0,03 % en poids d'oxyde de fer.

Selon le cas, le procédé de purification de l'invention peut aussi comprendre l'une ou plusieurs des caractéristiques suivantes :

- le charbon actif est choisi parmi les charbons actifs produits à partir d'écorce de noix de coco, de tourbe, de lignite, de houille, d'anthracite, de polymères ou de résines ;
- le flux gazeux est mis, en outre, en contact avec au moins un adsorbant particulaire zéolitique, de préférence la mise en contact du flux gazeux avec les particules de zéolite est opérée subséquemment à la mise en contact dudit flux gazeux avec les particules d'adsorbant carboné poreux ;
- la zéolite est de type zéolite X, A ou une faujasite échangée à au moins 70% au lithium ou au calcium, et/ou une zéolite de type faujasite dont le rapport Si/Al est compris entre environ 1 et 1,5 ;
- le flux gazeux est mis, en outre, en contact avec au moins un adsorbant formé de particules d'alumine activée ou de gel de silice, de préférence la mise en contact du flux gazeux avec les particules d'alumine activée ou de gel de silice est opérée préalablement à la mise en contact dudit flux gazeux avec les particules d'adsorbant carboné poreux ou mixte ;
- il est de type PSA ou TSA et, de préférence, comprend de 2 à 12 adsorbeurs ;
- le flux gazeux est un flux d'hydrogène, en particulier un gaz de synthèse issu d'un reformage ou d'un craquage d'hydrocarbures ;
- la pression d'adsorption est comprise entre 2 bars et 70 bars, de préférence entre 5 bars et 40 bars ;
- la pression de désorption est comprise entre 0.1 bar et 10 bars, de préférence entre 1 et 5 bars ;
- la température du flux d'hydrogène à purifier est comprise entre -25 °C et + 60°C, de préférence entre + 5°C et + 35°C ;
- l'adsorbant carboné poreux a des pores ayant une taille comprise entre 0.4 nm et 4 nm, préférentiellement entre 0.5 nm et 2 nm ;
- le flux gazeux est un flux d'air ou d'azote ;
- la granulométrie des particules de charbon actif est comprise entre 1 mm et 5 mm ;
- le composé soufré est choisi parmi $H_2S$, COS, les mercaptans.

Dans le cadre de la présente invention, les termes « purification » de gaz sont synonymes des termes « séparation de gaz ».

L'invention va être maintenant expliquée plus en détail dans les exemples ci-dessous donnés à titre illustratif mais non limitatif.

Exemples

Les inventeurs de la présente invention ont montré que, de façon surprenante, une amélioration notable de l'efficacité d'un procédé PSA de séparation ou de purification d'un gaz contenant des impuretés soufrées, en particulier un flux d'hydrogène, peut être obtenue grâce à un traitement chimique judicieux de l'adsorbant carboné, c'est-à-dire du charbon actif mis en oeuvre dans le procédé PSA.

Pour ce faire, des essais expérimentaux ont été réalisés sur différents charbons actifs de nature ou origine différentes, lesquels ont, selon le cas, subi ou non des traitements chimiques destinés à modifier leurs caractéristiques physiques ou physico-chimiques.

Les charbons testés sont soit des charbons dits de « terre » (anthracite, tourbe, lignite, houille...), soit des charbons dits « végétaux » (écorces d'arbres, enveloppes de noix de coco...), soit des charbons dits « synthétiques » (polymères...).

Dans tous les cas, le charbon actif de départ, c'est-à-dire le charbon actif précurseur n'ayant pas été traité chimiquement, est un charbon disponible dans le commerce auprès des sociétés spécialisées, telles que NORIT, CECA, CARBOTECH, PICA...

Le montage expérimental utilisé consiste à balayer un échantillon de 150 cm$^3$ de charbon actif placé dans une cellule par gaz de composition connue, à savoir un mélange gazeux contenant 97,5 % de $H_2$, 2,0 % de $O_2$ et 0,5 % de $H_2S$.

Après balayage avec ce mélange gazeux, à une température de 20°C et à pression atmosphérique, pendant une durée déterminée (en l'occurrence 1 heure), l'échantillon est ensuite balayé par un flux d'hydrogène pur (pureté > 99,9 %) destiné à désorber l'essentiel des impuretés $H_2S$ adsorbées au cours du balayage initial.

Pour chacun des charbons ainsi testés un échantillon de produit neuf et un échantillon de produit traité par le mélange contenant de l'$H_2S$, représentatif du premier tiers du charbon, côté introduction du mélange, ont été analysés.

Le paramètre pris en compte pour comparer les charbons actifs est le soufre déposé, c'est-à-dire la quantité de soufre présent dans l'échantillon traité moins la quantité de soufre éventuellement présent dans l'échantillon neuf.

Les résultats obtenus montrent que :

- pour la majorité des charbons actifs, quelle que soit leur provenance, le dépôt de soufre est important et représente une fraction importante, à savoir plusieurs dizaines de %, du soufre introduit dans le mélange gazeux ;
- à l'inverse, pour d'autres charbons, le dépôt de soufre est inférieur d'au moins un ordre de grandeur à ces valeurs. Tous les charbons présentant un faible dépôt de soufre sont des charbons ayant subi le traitement spécial de lavage selon l'invention.

Une explication avancée pour ces résultats serait que le phénomène de dépôt du soufre s'explique par une réaction d'oxydation, compte tenu du fait qu'un composé soufré comme l'$H_2S$ est un corps réducteur.

La réaction de ce type la plus simple est :

$$H_2S + \tfrac{1}{2} O_2 \rightarrow H_2O + S$$

Toutefois, il est possible que de nombreuses autres réactions se produisent simultanément mettant en oeuvre par exemple $H_2SO_4$, $SO_2$ ...

Cette réaction peut être catalysée par la présence d'oxydes minéraux tels $Fe_2O_3$, $Al_2O_3$, $SiO_2$ à la surface du charbon actif.

Avec un charbon actif lavé et en particulier lavé à l'acide, selon l'invention, on peut diminuer considérablement la quantité d'impuretés présentes dans ces charbons et ralentir de la sorte la cinétique de la réaction d'oxydation de $H_2S$.

De plus, il est possible que la présence de silice ($SiO_2$) puisse également favoriser les dépôts de soufre et un lavage à l'acide fluorhydrique peut conduire de la sorte, en éliminant tout ou partie de la silice, à de bons résultats.

De manière générale, l'utilisation de charbons actifs relativement purs à l'origine est favorable et il peut être ainsi intéressant d'utiliser des charbons d'origine végétale plutôt que des charbons de terre.

Une activation vers 800 à 1100°C, de préférence 900 à 1000°C en l'absence d'oxygène (ou avec un fluide sensiblement pauvre en oxygène) doit également être favorable en supprimant les sites oxygénés pouvant conduire à des dépôts irréversibles.

En résumé, les impuretés contenues dans les charbons actifs industriels et provenant de la matière première utilisée, c'est-à-dire du sol pour les charbons de terre et des végétaux eux-mêmes pour les charbons végétaux, impuretés parmi lesquelles on peut citer de manière non limitative le zinc, le fer, la silice, l'alumine, des métaux alcalins et alcalino-terreux, des traces d'éléments de transition... favorisent les dépôts de soufre.

Les mécanismes exacts mis en jeu ne font pas partie de la présente invention et les relations chimiques citées plus haut ne sont données qu'à titre indicatif et nullement limitatif.

Dans tous les cas, les charbons qui contiennent peu d'impuretés, à la suite d'un traitement chimique selon l'invention, conduisent à un fonctionnement, en contact avec des produits soufrés, sans dépôt de soufre ou avec un dépôt très sensiblement réduit, qui permet leur fonctionnement sur de longues périodes sans avoir à effectuer des changements de charge.

Un des moyens les plus simples pour limiter la quantité d'impuretés présentes est de soumettre le charbon actif à un lavage à l'acide tel que HCl, HF, $H_2SO_4$, $HNO_3$ ou tout acide minéral fort, éventuellement de neutraliser l'acidité résiduelle par un lavage avec une solution alcaline, tel un hydroxyde ou un sel d'acide faible d'un métal alcalin ou alcalino-terreux, de le rincer à l'eau pure et de le sécher.

Les conditions de lavage telles que nature de l'acide, température, concentration, temps sont à définir suivant la nature du charbon et de l'acide utilisé.

Le taux de cendres est peut-être un bon moyen pour caractériser ces charbons avec peu d'impuretés soit après lavage soit « purs » au départ.

Les cendres sont les composés minéraux présents dans le charbon. Ces composés peuvent provenir d'une pollution, notamment dans le cas des charbons dits de terre, ou de la présence naturelle dans le précurseur organique, par exemple en tant qu'oligo-éléments.

Le traitement conduisant aux charbons actifs étant essentiellement oxydant, les composés minéraux se retrouvent sous forme d'oxydes à haut degré d'oxydation : $Fe_2O_3$, $Al_2O_3$, $SiO_2$, $CuO$, $Na_2O$, $K_2O$...

A l'exception de la silice $SiO_2$, tous les oxydes constituant les cendres sont solubles dans les acides forts pour former des sels, par exemple

$$Fe_2O_3 + 6\,HNO_3 \rightarrow 3\,H_2O + 2\,Fe(NO_3)_3$$

$$Al_2O_3 + 6\,HCl \rightarrow 3\,H_2O + 2\,AlCl_3$$

$$Na_2O + H_2SO_4 \rightarrow H_2O + Na_2SO_4$$

Ces sels sont solubles, surtout lorsqu'il s'agit de chlorures et nitrates, ainsi un lavage à l'acide peut les éliminer largement, surtout suivi d'un rinçage final à l'eau pur.

L'homme de l'art sait mettre en contact les acides minéraux à des températures et concentrations où l'acide, notamment $HNO_3$, ne réagit pas avec le charbon et conduit juste à l'élimination des sels solubles.

Dans le cas où l'élimination de la silice est souhaitée, un lavage à l'acide fluorhydrique sera employé.

Eventuellement, plusieurs acides peuvent être utilisés, en mélange ou en traitement en série.

De préférence, l'acide est utilisé à une concentration de 0,05 à 5 M, de préférence de l'ordre de 0,2 à 2 M.

En outre, le charbon actif peut subir une ou plusieurs étapes de broyage ou de mise en forme avant et/ou après le traitement selon la présente invention.

Le taux de cendre est obtenu par élimination du carbone sous forme de $CO_2$. Un moyen consiste à chauffer le charbon vers 1000°C en présence d'oxygène jusqu'à l'obtention d'un résidu stable en poids.

Dans le cas où le charbon est peu réactif, un broyage préalable peut être employé, voire un traitement chimique oxydant.

L'analyse chimique des cendres peut être effectuée par solubilisation des oxydes minéraux dans un acide fort (HCl, $HNO_3$, $H_2 SO_4$...) et analyse chimique de la solution obtenue.

Un charbon actif classique contient entre 5 et 15 % en poids de cendres. Le lavage à l'acide va baisser ce taux de cendre jusqu'à une valeur qui n'est plus diminuable par lavage ultérieur. Ainsi, il peut arriver que le taux de cendre final du produit lavé ne soit pas proche de 0, pourvu que les cendres restantes dans le produit final ne soient plus éliminables par lavage acide supplémentaire. L'homme de l'art comprendra que les cendres non éliminables sont en pratique non accessibles aux réactifs chimiques, et donc neutres vis-à-vis de la présence de composés soufrés. En résumé, un charbon actif selon l'invention contient de préférence un taux de cendre accessible inférieur à 2 % en poids, ce qui signifie que, par lavage supplémentaire à l'acide dans des conditions qui ne modifient pas la structure poreuse du charbon actif, le taux de cendre résiduelle ne baissera pas de plus de 2 %.

Les conditions du lavage à l'acide dépendent du charbon actif à traiter et de l'acide. La mesure du taux de cendre résiduelle accessible (TCRA) sera de préférence effectuée dans des conditions proches ou identiques à celles du lavage industriel. On prendra les mêmes concentrations, température, type d'acide, temps.

La mesure précise du TCRA du produit industriel sera menée de la manière suivante :

- Un échantillon du produit industriel est oxydé pour la mesure de son taux de cendre totale (TCT).
- Un échantillon du même produit est, en parallèle, lavé dans des conditions physico-chimiques proches des conditions de lavage industriel. Le lavage est conduit de manière à éliminer toutes les cendres accessibles. L'homme de l'art comprendra que cela implique un volume d'acide et/ou un nombre de lavages et/ou un temps de lavage supérieur aux conditions industrielles qui sont définies par le coût du traitement. La différence entre le lavage complet et le lavage industriel tient essentiellement à la consommation de réactifs, au nombre de lavages et au temps de contact.
- Après lavage complet, le charbon actif est oxydé pour la mesure du taux de cendre résiduelle (TCR) ; on a :

$$TCRA = TCT - TCR$$

$$TCRA < 2 \%$$

suivant l'invention

Bien qu'il soit habituel d'utiliser des particules de charbon actif pour éliminer certaines des impuretés contenues dans les flux d'hydrogène, jusqu'à présent, il n'avait jamais été mis en évidence qu'un charbon actif poreux ayant subi un traitement chimique particulier, tel qu'expliqué ci-dessus, pouvait avoir une influence notable sur les performances d'un procédé d'adsorption de type PSA pour purifier ou séparer un flux gazeux, en particulier un flux d'hydrogène gazeux, contenant des impuretés soufrées.

Au vu des résultats obtenus en laboratoire, le procédé de l'invention a été validé industriellement sur une unité traitant un gaz de four à coke ayant la composition suivante :

| | |
|---|---|
| $H_2$ | 58 % mol |
| $CH_4$ | 23 % mol |
| Cn Hm | 3 % mol |
| $CO_2$ | 3 % mol |
| CO | 6 % mol |
| $N_2$ | 6 % mol |
| $O_2$ | 1 % mol |

et contenant en particulier comme autres impuretés de l'eau et plusieurs dizaines à quelques centaines de ppm de $H_2S$.

Contrairement à l'expérience acquise avec un charbon activé classique qui nécessitait - comme on l'a indiqué précédemment - plusieurs changements de charge par an, l'unité en question comportant un premier lit de charbon activé spécialement traité a fonctionné de façon satisfaisante plusieurs années sans avoir à changer la charge en question.

Un tel procédé apporte donc des avantages très importants par rapport à la solution consistant à utiliser des charbons classiques.

Il supprime tous les temps morts - et les pertes de production $H_2$ correspondantes - nécessaires aux déchargements des charges polluées et à la mise en place d'une nouvelle charge.

Le surcoût initial de quelques dizaines de pourcent dû aux traitements complémentaires que l'on doit faire est immédiatement compensé par le fait de ne pas avoir à renouveler la charge au bout de quelques mois.

Des méthodes avaient été mises en place pour limiter les inconvénients cités ci-dessus mais elles aussi entraînaient des investissements importants.

Ainsi, les unités PSA en question comportaient un adsorbeur en réserve de telle sorte à pouvoir agir cycliquement sur chaque adsorbeur sans avoir à arrêter la production d'hydrogène.

Outre l'investissement d'un adsorbeur supplémentaire, cette solution avait nécessité de prévoir des moyens d'isolation coûteux sur chacun des adsorbeurs afin de pouvoir intervenir sur une unité en service en toute sécurité.

De la même manière, pour limiter le coût de remplacement du charbon activé, le charbon pollué était retraité afin de pouvoir être réutilisé. Outre le coût du traitement, il était nécessaire de rajouter 15 à 30 % de charbon neuf pour compenser les pertes et le charbon ainsi obtenu avait des capacités d'adsorption plus faibles que le charbon d'origine, conduisant ainsi à une baisse des performances.

Il apparaît donc que si l'utilisation de charbons classiques permet de produire de l'hydrogène pur, il y a un avantage incontestable à utiliser le charbon actif traité selon la présente invention.

Dans le cadre de la présente invention, on peut utiliser en tant que précurseurs des charbons actifs disponibles dans le commerce, à savoir des charbons actifs préparés à partir de tourbe, de coke, d'anthracite, de houille, d'écorce d'arbre, de noyaux de fruits ou de coquilles végétales, par exemple de noix de coco, d'amandes...

Le charbon activé est traité chimiquement, comme expliqué ci-avant, pour en éliminer les oxydes, mis éventuellement aux dimensions appropriées avant ou après lavage à l'acide, éventuellement broyé, puis extrudé en présence d'un liant à base carbonée, par exemple le brai.

L'invention n'est pas limitée à la purification d'hydrogène mais elle s'applique aussi à la purification d'autres gaz, en particulier de l'air, l'azote, le CO le $CH_4$ et le $CO_2$, dès lors que le mélange gazeux contient des impuretés soufrées.

## Revendications

1. Procédé de traitement chimique d'un charbon actif destiné à éliminer au moins une partie des oxydes minéraux susceptibles d'être associés audit charbon, lesdits oxydes métalliques étant choisis dans le groupe formé par $SiO_2$, $Fe_2O_3$, $Al_2O_3$, $Na_2O$, $CuO$ et $K_2O$ dans lequel on procède selon les étapes de :

   (a) amener un charbon actif auquel sont associés des oxydes minéraux devant être éliminés ;
   (b) laver ledit charbon actif avec au moins une solution contenant au moins un acide minéral fort pour éliminer au moins une partie desdits oxydes ;
   (c) rincer ledit charbon actif lavé à l'étape (b) avec au moins une solution aqueuse pour éliminer les oxydes résiduels et/ou des résidus d'acide ;
   (d) sécher le charbon actif obtenu à l'étape (c) ;
   (e) récupérer un charbon actif ayant un taux de cendre résiduelle accessible inférieur à 2 % en poids, préférentiellement inférieur à 1,5 % en poids.

2. Procédé selon la revendication 1, **caractérisé en ce que** le charbon actif est un charbon de terre, végétal ou synthétique, de préférence un charbon végétal.

3. Procédé selon la revendication 1 ou 2, **caractérisé en ce qu'**on élimine, en outre, au moins une partie des oxydes de calcium et/ou de magnésium par lavage du charbon à l'étape (b).

4. Procédé selon les revendications 1 à 3, **caractérisé en ce qu'**à l'étape (b), l'acide est choisi dans le groupe formé par HCl, HF, $HNO_3$ et $H_2SO_4$.

5. Procédé selon les revendications 1 à 4, **caractérisé en ce qu'**il comporte une étape supplémentaire, entre les étapes (b) et (c), de neutralisation de l'acidité résiduelle par lavage avec une solution d'hydroxyde alcalin ou alcalino-terreux ou un sel d'acide faible d'un métal alcalin ou alcalino-terreux.

6. Procédé selon les revendications 1 à 5, **caractérisé en ce qu'**à l'étape (c), le rinçage est réalisé avec de l'eau, de préférence de l'eau distillée ou déminéralisée.

7. Procédé selon les revendications 1 à 6, **caractérisé en ce qu'**à l'étape (d), le séchage est réalisé à une température comprise entre 40°C et 120°C, de préférence 80°C et 100°C.

8. Charbon actif susceptible d'être obtenu par un procédé de traitement chimique selon l'une des revendications 1 à 7, dont le taux de cendre résiduelle accessible est inférieur à 2 % en poids, de préférence inférieur à 1,5 % en poids.

9. Charbon actif se caractérisant par un taux de cendre de moins de 2 % en poids, de préférence de moins de 1,5 % en poids, et/ou par une teneur de moins de 0,1 % en poids en chacun des oxydes métalliques choisis parmi les oxydes de Fe, Al, Si, Mg, Cu, Na, K et Ca, de préférence inférieure à 0,05 % en poids en oxyde de fer, préférentiellement inférieure à 0,03 % en poids d'oxyde de fer.

10. Procédé de purification d'un flux de gaz contenant au moins un composé soufré dans lequel le flux gazeux à purifier est successivement mis en contact avec un charbon actif selon l'une des revendications 8 ou 9 et/ou un charbon actif obtenu par un procédé de traitement chimique selon l'une des revendications 1 à 7.

11. Procédé selon la revendication 10, **caractérisé en ce que** le flux gazeux est mis, en outre, en contact avec au moins un adsorbant particulaire zéolitique.

**12.** Procédé selon la revendication 11, **caractérisé en ce que** la zéolite est de type zéolite X, A ou une faujasite échangée à au moins 70% au lithium ou au calcium, et/ou une zéolite de type faujasite dont le rapport Si/Al est compris entre environ 1 et 1,5, de préférence 1 à 1,25.

**13.** Procédé selon l'une des revendications 10 à 12, **caractérisé en ce que** le flux gazeux est mis, en outre, en contact avec au moins un adsorbant formé de particules d'alumine activée ou de gel de silice.

**14.** Procédé selon l'une des revendications 10 à 13, **caractérisé en ce qu'**il est de type PSA ou TSA et, de préférence, comprend de 2 à 12 adsorbeurs.

**15.** Procédé selon l'une des revendications 10 à 14, **caractérisée en ce que** le flux gazeux est un flux d'hydrogène, en particulier un gaz de synthèse issu d'un reformage ou d'un craquage d'hydrocarbures.

**16.** Procédé selon l'une des revendications 10 à 14, **caractérisé en ce que** le flux gazeux est un flux d'air ou d'azote.

**17.** Procédé selon l'une des revendications 10 à 16, **caractérisé en ce que** la granulométrie des particules de charbon actif est comprise entre 1 mm et 5 mm

**18.** Procédé selon l'une des revendications 10 à 17, **caractérisé en ce que** le composé soufré est choisi parmi $H_2S$, COS, les mercaptans.

**Office européen des brevets**

## RAPPORT DE RECHERCHE EUROPEENNE

Numéro de la demande

EP 01 40 0517

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 949 952 A (PINTSCH BAMAG AG) 19 février 1964 (1964-02-19) * page 2, ligne 4 - ligne 77 * --- | 1 | C01B31/12 |
| A,D | WO 97 45363 A (AIR LIQUIDE ;JUTARD JEROME (FR); BOMARD OLIVIER (FR); MOREAU SERGE) 4 décembre 1997 (1997-12-04) * revendications 1,7 * --- | 10 | |
| A | PATENT ABSTRACTS OF JAPAN vol. 004, no. 022 (C-074), 23 février 1980 (1980-02-23) & JP 54 162692 A (TOHO RAYON CO LTD), 24 décembre 1979 (1979-12-24) * abrégé * ----- | 1 | |

DOMAINES TECHNIQUES RECHERCHES (Int.Cl.7)

C01B

Le présent rapport a été établi pour toutes les revendications

| Lieu de la recherche | Date d'achèvement de la recherche | Examinateur |
|---|---|---|
| BERLIN | 8 juin 2001 | Clement, J-P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

ANNEXE AU RAPPORT DE RECHERCHE EUROPEENNE
RELATIF A LA DEMANDE DE BREVET EUROPEEN NO.

EP 01 40 0517

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

08-06-2001

| Document brevet cité au rapport de recherche | | Date de publication | Membre(s) de la famille de brevet(s) | | Date de publication |
|---|---|---|---|---|---|
| GB 949952 | A | | AUCUN | | |
| WO 9745363 | A | 04-12-1997 | FR | 2749004 A | 28-11-1997 |
| | | | AU | 3035997 A | 05-01-1998 |
| | | | DE | 69700400 D | 16-09-1999 |
| | | | DE | 69700400 T | 23-03-2000 |
| | | | EP | 0840708 A | 13-05-1998 |
| | | | US | 5912422 A | 15-06-1999 |
| JP 54162692 | A | 24-12-1979 | AUCUN | | |

EPO FORM P0460

Pour tout renseignement concernant cette annexe : voir Journal Officiel de l'Office européen des brevets, No.12/82